**Europäisches Patentamt**

**European Patent Office**

**Office européen des brevets**

(19)

(11) Veröffentlichungsnummer: **0 111 111**
**A1**

(12) ## EUROPÄISCHE PATENTANMELDUNG

(21) Anmeldenummer: **83110355.1**

(22) Anmeldetag: **18.10.83**

(51) Int. Cl.³: **B 60 D 1/14**

(30) Priorität: **20.10.82 DE 3238785**

(43) Veröffentlichungstag der Anmeldung:
**20.06.84 Patentblatt 84/25**

(84) Benannte Vertragsstaaten:
**AT BE CH DE FR GB IT LI LU NL SE**

(71) Anmelder: **Hörtel, Fritz**
**Neustadter Strasse 75**
**D-6704 Mutterstadt(DE)**

(72) Erfinder: **Hörtel, Fritz**
**Neustadter Strasse 75**
**D-6704 Mutterstadt(DE)**

(54) **Vorrichtung zum Ankuppeln eines Nachlauffahrzeuges an einen Vorderwagen.**

(57) Gegenstand der Erfindung ist eine Vorrichtung zum Ankuppeln eines Nachlauffahrzeuges 2 an einen Vorderwagen 1, wobei zwischen den beiden Wagen 1, 2 eine Deichsel 8 angeordnet ist. Die Deichsel 8 besteht aus seitlichen dreieckförmig zum Nachlauffahrzeug 2 hin laufenden Streben 9, die mit Hilfe von Querstreben 10 verbunden sind, wobei die Deichsel 8 am Vorderwagen 1 an Gelenken 3, 4 derart angebracht ist, daß die durch die Gelenke 3, 4 gebildete Wippachse 11 möglichst nahe an der Hinterachse 7 des Fahrzeuges 1 liegt, Am Nachlauffahrzeug 2 ist die Deichsel 8 am Ausschwenkpunkt des Wagens 2 an Gelenken 5, 6 angeordnet, die auf einer zur Wippachse 11 senkrechten Achse 12 liegen.

EP 0 111 111 A1

./.

Croydon Printing Company Ltd

FIG. 1

FIG. 2

Vorrichtung zum Ankuppeln eines Nachlauffahrzeuges an einen Vorderwagen

Die Erfindung betrifft eine Vorrichtung zum Ankuppeln eines Nachlauffahrzeuges an einen Vorderwagen, nämlich bei Gelenkbussen, Sattelfahrzeugen oder Fahrzeugen mit Anhänger und spurgeführten Fahrzeugen.

Derartige Nachlauffahrzeuge werden an den Vorderwagen an sogenannten Kugelgelenken angehängt, wobei sich am Vorderwagen ein sogenannter Kugelkopf befindet, an dem dann das Nachlauffahrzeug eingehängt wird. Der wesentliche Nachteil dieser Verbindung besteht darin, daß für das Nachlauffahrzeug keine Seitenstabilität besteht, so daß hierbei ungünstige Schwingungen auftreten können. Außerdem kann das Nachlauffahrzeug starke Wippbewegungen ausführen. Ähnliche ungünstige Bedingungen ergeben sich bei einer Verbindung mit Hilfe eines Drehkranzes, wobei hier der Drehpunkt dieses Kranzes und die eigentliche Wippachse zusammenfallen, wodurch kostruktionsbedingt besonders starke Schwingungen auf das Nachlauffahrzeug übertragen werden. Ein weiterer Nachteil besteht darin, daß es sich hierbei um eine äußerst aufwendige Konstruktion handelt.

Der Erfindung liegt die Aufgabe zugrunde, die Fahreigenschaften derartiger mehrteiliger Fahrzeuge dahingehend zu verbessern, daß die Verbindung der beiden Fahrzeugteile unter Beibehaltung der erforderlichen Lenkgeometrie zwangsläufig stabilisiert ist, indem das Auf- und Niederschwingen durch das Wegnehmen der Hebelwirkung vermieden wird.

Diese Aufgabe wird nach der Erfindung dadurch gelöst, daß zwischen Vorderwagen und Nachlauffahrzeug eine Deichsel angeordnet ist, daß die Deichsel an einer waagerechten Wippachse nahe der Hinterachse des Vorderwagens an diesem angebracht ist und daß ein zweites Gelenk mit einer senkrechten Schwenkachse am Ausschwenkpunkt vorgesehen ist.

Eine vorteilhafte Ausführungsform besteht darin, daß in der waagerechten Wippachse ein Doppelgelenk angeordnet ist.

Weiterhin ist es vorteilhaft, daß das zweite Gelenk als Doppelgelenk ausgebildet ist.

Schließlich wird vorgeschlagen, daß das zweite Gelenk als Ausschwenkpunkt an einer am Nachlauffahrzeug starr angebrachten Zugstrebe angeordnet ist und daß das Ende der Zugstrebe an einer Führungsbahn am Vorderwagen kreisbogenförmig geführt ist.

Die Erfindung bringt den wesentlichen Vorteil, daß durch das Trennen der Gelenke die Fahreigenschaften und die Laufruhe des Gespannes wesentlich verbessert werden kann, wobei es möglich ist, die Wippachse für das nachlaufende Fahrzeug derart dicht an die Hinterachse des Vorderwagens zu legen, daß ein Wippen des Nachlauffahrzeuges nahezu ausgeschlossen wird. Gleichzeitig bleibt aber die erforderliche Lenkgeometrie für das Ausschwenken des angekoppelten Fahrzeuges erhalten, wobei darüberhinaus durch ein entsprechendes Doppelgelenk eine Seitenstabilität erreicht wird.

Die Erfindung wird in der nachfolgenden Beschreibung anhand von in den Zeichnungen dargestellten Ausführungsbeispielen erläutert.

Es zeigen,

Fig. 1          eine Draufsicht auf eine derartige zwischen einem Vorderwagen und einem Nachlauffahrzeug angeordneten Kupplung,

Fig. 2          die Anordnung im Aufriß,

Fig. 3          eine weitere Ausführungsform einer derartigen Vorrichtung in der Draufsicht und

Fig. 4          die Vorrichtung gemäß Fig. 3 im Aufriß.

Mit dem Bezugszeichen 1 ist ein Vorderwagen gekennzeichnet und mit dem Bezugszeichen 2 ein Nachlauffahrzeug. Es kann sich hierbei um alle möglichen Verbindungsarten handeln, wie beispielsweise bei Sattelfahrzeugen, Gelenkbussen und dergleichen, wobei demnach das Nachlauffahrzeug 2 an der Hinterachse 7 des Vorderwagens 1 abgestützt ist.

Zur Verbindung der beiden Fahrzeuge 1, 2 dient eine Deichsel 8, die zwei äußere dreieckförmig zum Nachlauffahrzeug 2 zulaufende Seitenstreben 9 aufweist, die mit Hilfe von Querstreben 10 verbunden sind. Die Deichsel 8 ist an Gelenken 3, 4 am Vorderwagen 1 angelenkt, wobei die Verbindungsachse 11 dieser beiden Gelenke 3, 4 die Wippachse darstellt und waagerecht, d.h. parallel zur Hinterachse 7 des Vorderwagens 1 verläuft. Diese Wippachse 11 befindet sich möglichst nahe dieser Hinterachse 7.

Weiterhin ist die Deichsel 8 am Ausschwenkpunkt für das

Nachlauffahrzeug 2 an diesem angeordnet, wobei dieser Ausschwenkpunkt derart gelegt ist, daß die Lenkgeometrie für das Ausschwenken des angekoppelten Fahrzeuges erhalten bleibt. Diese Schwenkachse 12 verläuft senkrecht zur Wippachse 11 und es befinden sich an der Deichsel zwei Gelenke 5, 6, durch die die Achse 12 verläuft. Zur entsprechenden Anordnung des Ausschwenkpunktes ist am Nachlauffahrzeug 2 ein Vorbau 13 angeordnet.

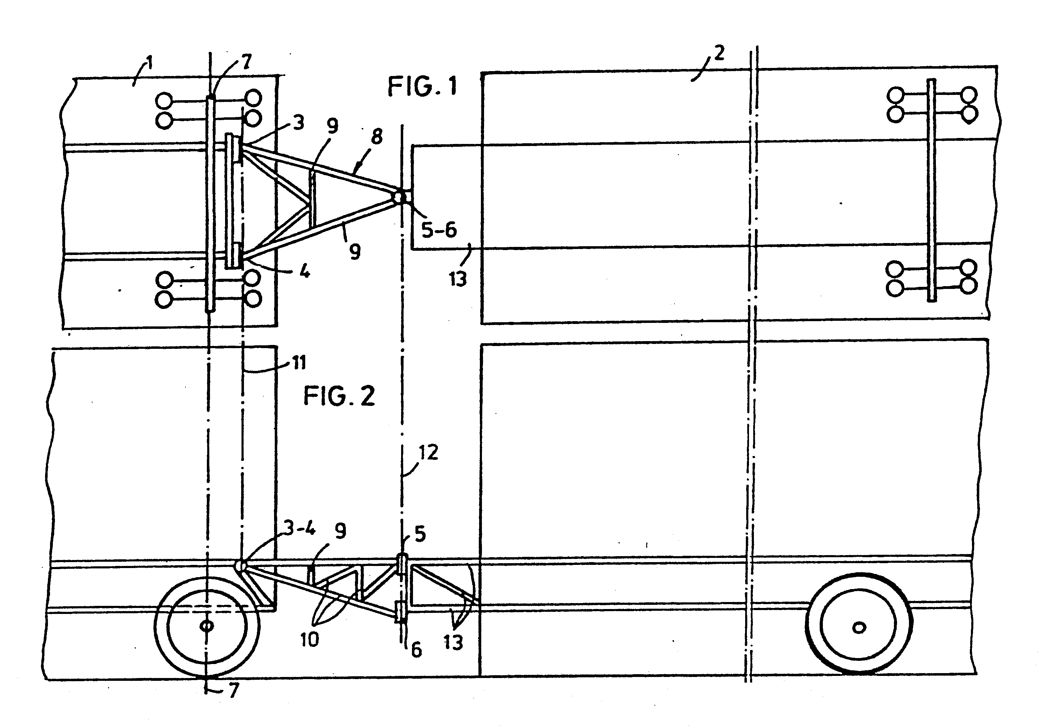

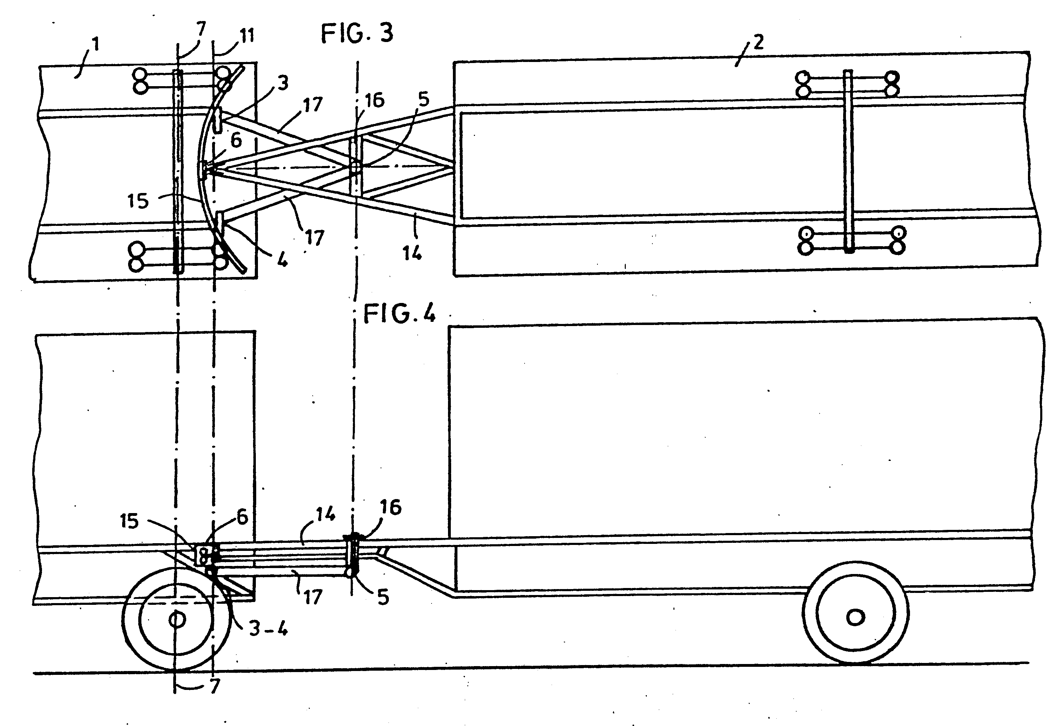

Bei der weiteren Ausführungsform nach den Figuren 3 und 4 ist die Deichsel zweiteilig ausgebildet und besitzt einen starren Rahmen bzw. Zugstrebe 14 mit seitlichen Trägern, die zum Vorderwagen 1 hin spitz zulaufen und dort an einer Führungsbahn 15 kreisbogenförmig geführt werden. Der Ausschwenkpunkt 5 für das Nachlauffahrzeug 2 befindet sich an einer Querstrebe 16 der Zugstrebe 14, wobei von dort aus zwei Verbindungshebel 17 als Deichsel zum Vorderwagen 1 verlaufen und dort möglichst nahe an der Hinterachse 7 des Fahrzeuges 1 an den Gelenken 3, 4 gehaltert sind, die die waagerechte Wippachse 11 bilden. Auch durch diese gegenüber der Ausführungsform nach den Figuren 1 und 2 etwas aufwendigeren Konstruktion werden die genannten Vorteile erzielt.

Patentansprüche

1) Vorrichtung zum Ankuppeln eines Nachlauffahrzeuges an einen Vorderwagen, nämlich bei Gelenkbussen, Sattelfahrzeugen oder Fahrzeugen mit Anhänger und spurgeführten Fahrzeugen, dadurch gekennzeichnet, daß zwischen Vorderwagen (1) und Nachlauffahrzeug (2) eine Deichsel (8, 17) angeordnet ist, daß die Deichsel (8, 17) an einer waagerechten Wippachse (11) nahe der Hinterachse (7) des Vorderwagens (1) an diesem angebracht ist und daß ein zweites Gelenk (5, 6) mit einer senkrechten Schwenkachse (12) am Ausschwenkpunkt vorgesehen ist.

2) Vorrichtung nach Anspruch 1, dadurch gekennzeichnet, daß in der waagerechten Wippachse (11) ein Doppelgelenk (3, 4) angeordnet ist.

3) Vorrichtung nach Anspruch 1, dadurch gekennzeichnet, daß das zweite Gelenk als Doppelgelenk (5,6) ausgebildet ist.

4) Vorrichtung nach Anspruch 1 bis 3, dadurch gekennzeichnet, daß das zweite Gelenk (5) als Ausschwenkpunkt an einer am Nachlauffahrzeug (2) starr angebrachten Zugstrebe (14) angeordnet ist und daß das Ende der Zugstrebe (14) an einer Führungsbahn (15) am Vorderwagen (1) kreisbogenförmig geführt ist.

# FIG.1

# FIG.2

- 2 -

FIG. 3

FIG. 4

# EUROPÄISCHER RECHERCHENBERICHT

EP 83 11 0355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 635 627 (M. VALIN) <br> * Figuren 5,8 * | 1-3 | B 60 D 1/14 |
| X | FR-A-2 277 716 (B. DESBORDES) <br> * Figuren 7,8 * | 1-3 | |
| A,P | EP-A-0 066 269 (K. KÄSSBOHRER FAHRZEUGWERKE) <br> * Figuren 1,2 * | 4 | |
| A | DE-A-2 909 429 (J.M. BALDENIUS) <br> * Figuren 4,5 * | 4 | |

**RECHERCHIERTE SACHGEBIETE (Int. Cl. ³)**

B 60 D
F 16 F
B 62 D

Der vorliegende Recherchenbericht wurde für alle Patentansprüche erstellt.

| Recherchenort <br> DEN HAAG | Abschlußdatum der Recherche <br> 06-02-1984 | Prüfer <br> CINQUANTINI B. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82